# EUROPEAN PATENT APPLICATION

(11) **EP 2 124 447 A1**
(43) Date of publication of application: **25.11.2009**
(21) Application number: 08156607.7
(22) Date of filing: 21.05.2008
(51) Int. Cl.: H04N 7/24

(54) **Mehod and device for graceful degradation for recording and playback of multimedia streams**

(71) Applicant: Telefonaktiebolaget LM Ericsson (publ), 164 83 Stockholm (SE)
(72) Inventor: Dahlstrand, Johan, 224 74 Lund (SE); Björkendahl, Johan, 223 58 Lund (SE); Ekenberg, Stefan, 240 30 Marieholm (SE); Roth, Göran, 211 59 Malmö (SE)
(74) Representative: Bratt, Hanna Catharina

(57) **Abstract**

The invention relates to a method for jitter buffer control in a device and a corresponding device implementing the method. The method includes the steps of monitoring a margin m of the jitter buffer, comparing the margin m with a reference margin mᵣ to calculate a control entity E; discarding old frames; setting (×) or clearing a discard marker for a number of future frames (P; I) in the jitter buffer in dependence of the control entity E; for each frame in an interval T_{M}, if the discard marker is not set, send the frame to a rendering device, else discard the frame. The invention enables control of the quality of saved and viewed multimedia streams in dependence of the currently occupied capacity of the device. Also, the invention relates to a corresponding device and computer program product.

## Description

### Technical field

The present invention relates to handling of multimedia streams for example in a mobile telecommunication device. The invention enables control of the quality of saved and viewed multimedia streams in dependence of the currently occupied capacity of the device. More particularly, the invention relates to a method for graceful degradation for recording and playback of multimedia streams in a device. Also, the invention relates to a corresponding device and computer program product implementing the method.

### Background

Streaming media is multimedia (e.g., audio, video, or text) that is continuously delivered to a device that renders it for an end-user. The streaming media can be either on demand, i.e., requested by the end-user, or broadcasted, i.e., the same multimedia stream is transmitted to multiple end-users. In the on-demand case the end-user has total control over the transmission, i.e., has the possibility to start, pause, resume, and stop the transmission of the multimedia stream. In the broadcast case the end-user is limited by the content and transmission times provided by the multimedia stream provider.

To allow the end-user some control of the multimedia stream, there is the possibility to record the stream to some permanent storage media such as, e.g., a magnetic tape or a hard drive. A special case of recording is time-shifting, which allows the end-user to record a multimedia stream, and at a later time start replay of that recording while the recording of the broadcast transmission continues. This means that the end-user has the possibility to delay the viewing of a broadcasted multimedia stream to a time which is more suitable to the end-user.

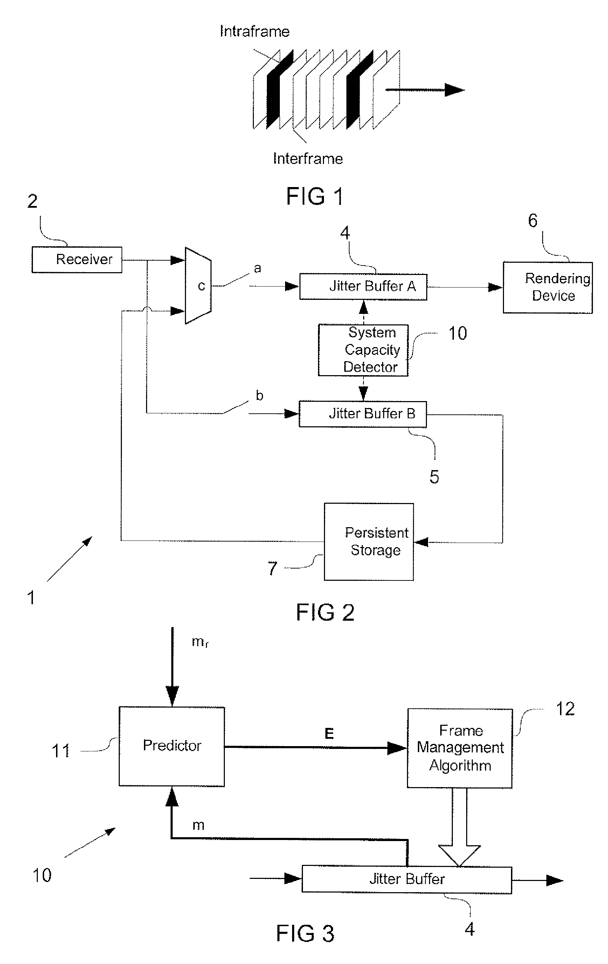

Most video compression techniques utilize two types of frames, intraframes and interframes. See figure 1. The interframe compression uses one or more of the earlier or later frames to compress the frame, whereas intraframes can be compressed and decompressed on their own without any additional information. This means that if an intraframe is lost during transmission the associated interframes can not be properly decompressed and rendered. Furthermore, there is a unique dependency order between the frames, i.e., frames must be decoded in the dependency order but do not have to be received in that order. Bi-directional frames, B frames, may refer to frames received later for decoding. Also, it is not strictly necessary that the order the frames are rendered are the same as the order in which they are decoded.

In order to allow for synchronization between the different parts of a multimedia stream, each frame is annotated with a timestamp that describe the recommended presentation time for that frame, i.e., when the frame should be rendered and presented to the end-user.

Viewing and recording of broadcasted multimedia transmissions are often performed on multipurpose systems, i.e., systems that are used for other tasks than solely watch and record multimedia transmissions. Examples of such systems are personal computers and mobile phones.

These systems have resource limitations, e.g., CPU cycles and access times to permanent storage. Furthermore, these kinds of systems also have an unpredictable usage of these limited resources. For example, receiving and rendering a complex MMS message on a mobile phone occurs at any time without any notice in advance. These items combined makes it difficult for a system to provide a good end-user experience since the recording and playback of a multimedia stream may be interrupted at any time by other system activities.

It is possible to reduce the effects of multimedia stream interruptions by for example using large buffers. This is, however, not desirable, since it requires additional storage capacity, which may already be a limited resource for the system in question. Furthermore, using buffers only reduces the problem, but does not eliminate it, since there is no way to predict how long the interruption may be.

When a video frame's recommended presentation time has passed the frame should be discarded and not rendered to the end-user. Since the video data is vulnerable to lost frames, especially if an intraframe is lost, the impact on the viewing experience for the end-user could be quite severe.

### Prior art

US published patent application No. 2003/0,167,472 discloses a method of displaying a video stream. The document describes a system that removes frames other than key frames when there are limited resources in the system, e.g. when the memory of a client is constrained only key frames are decoded and displayed. Preferably I-frames (intraframes) are kept. However, this document does not address the problems related to temporal constraints on the system. This system checks if there are resources available to decode the frame. However, the frame may already be late, and there is no way to detect that until it is time to decode the frame.

There is a need for a method enabling control of the quality of saved and viewed multimedia streams in dependence of temporal constraints and the currently occupied capacity of a device.

### Summary of the invention

This invention provides a controlled graceful degradation of playback and recording of a multimedia stream by providing early detection of limited system resource and then discarding video data in a controlled fashion, i.e., suitably keeping the intraframes, thus, providing a better viewing experience for the end-user. The invention runs through the jitter-buffer which contains future frames, i.e., frames that potentially will be rendered sometime in the future and proactively marks a limited amount of unimportant frames that, at the recommended presentation time, will be discarded instead of decoded.

In a first aspect, the invention provides a method for jitter buffer control in a device comprising: a receiver for receiving a multimedia stream of frames and capable of providing each frame with a time stamp containing information about a recommended presentation time tᵢ and providing each frame with a discard marker; at least one jitter buffer for temporarily storing the frames from the receiver; and a rendering device for playback of the multimedia stream.

According to the invention the method comprises:
monitoring a margin m of the jitter buffer, the margin m being defined as the time difference between the current time t_{now} and the recommended presentation time tᵢ of the first frame in the jitter buffer that has a recommended presentation time that is larger than t_{now};
comparing the margin m with a reference margin mᵣ to calculate a control entity E;
discarding frames which have tᵢ < t_{now} + ε;
setting or clearing the discard marker for a number of the frames in the jitter buffer in dependence of the control entity E;
for each frame where tᵢ is in the interval [t_{now}, t_{now} + T_{M}], if the discard marker is not set, send the frame to the rendering device, else discard the frame;
wait a time interval t_{inc};
repeat from the monitoring step.

In a second aspect, the invention provides a device comprising: a receiver for receiving a multimedia stream of frames and capable of providing each frame with a time stamp containing information about a recommended presentation time tᵢ; at least one jitter buffer for temporarily storing the frames from the receiver; a rendering device for playback of the multimedia stream.

According to the invention the receiver is arranged to provide each frame with a discard marker. A system capacity detector comprising a predictor is arranged to monitor a margin m of the jitter buffer, the margin m being defined as the time difference between the current time t_{now} and the recommended presentation time tᵢ of the first frame in the jitter buffer that has a recommended presentation time that is larger than t_{now}; to compare the margin m with a reference margin mᵣ to calculate a control entity E; and to output the control entity E to a frame management unit. Said frame management unit is being arranged to discard frames which have tᵢ < t_{now} + ε; to set or clear the discard marker for a number of the frames in the jitter buffer in dependence of the control entity E; to control the jitter buffer, for each frame where tᵢ is in the interval [t_{now}, t_{now} + T_{M}], if the discard marker is not set, to send the frame to the rendering device, else discard the frame; the predictor being arranged to wait a time interval t_{inc}; and to repeat from the monitoring step.

In a third aspect, the invention provides a computer program product comprising program code means adapted to cause a data processing device to perform the steps of the method as outlined above.

The invention is defined in claims 1, 10 and 15, while preferred embodiments are set forth in the dependent claims.

Embodiments of the invention will now be described more in detail in connection with the enclosed drawings.

### Brief description of the drawings

Figure 1 illustrates the relation between intraframes and interframes in a multimedia stream.
Figure 2 is a block diagram of a device according to an embodiment of the invention.
Figure 3 is a block diagram of the internal structure of the system capacity detector of figure 2 as connected to a jitter buffer.
Figure 4 illustrates the contents of a jitter buffer.
Figure 5 illustrates examples of frames marked for removal in an algorithm according to an embodiment of the invention.
Figure 6 illustrates an example of frames marked for removal in a system that is expected to have progressively worse performance.
Figure 7 illustrates an example of frame recovery.

### Detailed description of preferred embodiments

The invention will be described with reference to a device, e.g. a communication device such as a mobile telephone, having the capability of receiving a multimedia stream for recording and/or playback.

Figure 2 illustrates schematically a device 1 according to an embodiment of the invention, such as a mobile telephone. Only parts relevant to the invention are outlined while other components may be conventional. The device 1 is provided with a user interface comprising a keypad and a display for interaction with a user as well as communication ports (not shown).

The device 1 comprises a receiver 2 that is capable of receiving a multimedia stream from a content provider. The multimedia stream can be carried over any bearer, e.g., DVB-H, MBMS, or an internet connection. The multimedia may be e.g., audio, video, or text. In the description below it is assumed that the multimedia stream consists of video frames, but the invention is not limited to this example.

The device 1 further comprises at least one jitter buffer which is used to handle the natural variances in the reception of the multimedia data. The jitter buffer is also capable of handling limited duration resource utilization peaks. Suitably, there are two jitter buffers 4 and 5 in the device 1; one rendering jitter buffer 4 (A) is used to handle the data sent to a rendering device 6, whereas the other jitter buffer 5 (B) is used to handle data sent to persistent storage 7 in case of recording. The input for the rendering jitter buffer 4 may come either directly from the receiver 2 or from the persistent storage 7 in case of playback. The input to the persistent storage jitter buffer 5, if enabled, comes from the receiver 2. The input to jitter buffer 5 is only enabled in case of recording.

The receiver 2 and the persistent storage 7 are connected through a switch system a, b, c to the jitter buffers 4 and 5. A switch c may be controlled to select source, the receiver 2 or the persistent storage 7, to deliver the multimedia stream through switch a to the jitter buffer 4, and a switch b may connect the receiver 2 to the jitter buffer 5.

The persistent storage 7 is used to store the multimedia stream for rendering at a later time. To allow the rendering device 6 to use the media in the same format regardless if it comes directly from the receiver 2 or if it comes from the persistent storage 7, the data stored on the persistent storage 7 should preferably be in the same format as received by the receiver. This could be RTP (Real-time Transport Protocol)/RTCP (RTP Control Protocol), for example, in the case of DVB-H (Digital Video Broadcasting - Handheld) and MBMS (Multimedia Broadcast/Multicast Service).

The rendering device 6 is used to decompress the streaming media data and present it to the end-user, e.g., on a display and loudspeakers (not shown). The rendering device 6 contains a small buffer (not shown) to allow it to work in an efficient way. The rendering device 6 and display et cetera may be of conventional design.

The device 1 is further provided with a system capacity detector 10 connected to the jitter buffers 4 and 5. The system capacity detector 10 analyzes the jitter buffers 4 and 5, and is capable of early detecting situations where the system fails to keep up with the rate of the streaming media. The system capacity detector is described in more detail with reference to figure 3.

In case of direct rendering, e.g. video viewing, the streaming media is received from the content provider and placed in the jitter buffer 4 by the receiver 2. The jitter buffer 4 contains a few seconds of media data in order to handle variations in reception rate as well as limited system resource peaks. The data is then sent from the jitter buffer 4 to the rendering device 6 some time in advance of the actual presentation time, since it takes some time for the rendering device 6 to decompress the data and display it to the end-user. The jitter buffer 4 has a threshold that sets how far in advance the multimedia data should be sent to the rendering device 6.

In case of recording, the multimedia data from receiver 2 is also sent to persistent storage 7 through the other jitter buffer 5. However, different thresholds apply for the jitter buffer 5, since no presentation time needs to be taken into account, but other bottlenecks to the persistent storage 7 may be present.

Depending on the settings of the switch system controlling the switches a, b, and c, the user may:
- View live video, that is, video data received directly from the receiver 2.
- View a pre-recorded video from the persistent storage 7.
- View a live video, while at the same time recording it to the persistent storage 7.
- View a pre-recorded video while at the same time recording the input from the receiver to the persistent storage 7.

It should be noted that a special case of the last item is the possibility to watch the same program as is being recorded, that is, watch live video which is somewhat delayed.

In embodiments of the present invention, it is possible to let either or both multimedia streams through the jitter buffers 4 and 5 become "gracefully" degraded. The most useful situations are viewing the multimedia stream gracefully degraded, while simultaneously recording it to persistent storage 7 with best possible quality, or letting both multimedia streams become gracefully degraded in view of a current high load on the device 1. However, the other combinations are also possible.

The system capacity detector 10 is responsible for detecting when the recommended presentation times for the video frames in the jitter buffers 4 and 5 passes the threshold when they should be sent to the rendering device 6 and/or the persistent storage 7. When this case occurs it means that the system has not been able to render and/or store the video frames in the same rate as they were received from the receiver 2. This means that the system has to discard some data. In order to preserve some of the viewing experience for the end-user the interframes are removed from the jitter buffer 4 and/or 5, as the case may be. This means that there is less data that needs to be processed by the rendering device 6 and/or the persistent storage 7. In order to reduce the data even more, some of the intraframes could be removed as well, e.g., every other intraframe.

The effect, for the end-user, of removing the interframes as described above is that the end-user is presented with a video stream that resembles a slide show. This is much better than to be presented with a corrupted video stream that would be the case if the video data was discarded in an uncontrolled fashion.

For the remainder of this document it is assumed that the information stored in the jitter buffers are in form of RTP, Real Time Transport Protocol, packets. This is only to simplify the description. Any payload format is suitable as long as it contains information about frame type and about the recommended presentation time (RPT), i.e., when the image should be rendered to the end-user.

Figure 3 illustrates the internal structure of the system capacity detector 10 responsible for observing the internal state of the jitter buffers 4 and 5 and to predict the future behavior of them. It comprises a predictor 11 monitoring the jitter buffers 4 and 5, and a frame management algorithm unit 12 controlling discard markers of the frames in the jitter buffers.

For simplicity, we consider only one jitter buffer in the following. The same logic applies to both jitter buffers 4 and 5. The jitter buffer contains the frames to be rendered. Each frame in the jitter buffer has the following properties:
- Recommended presentation time, i.e. the time, local to the decoding system, when the frame is supposed to be displayed.
- Frame type, i.e., if it is an interframe or an intraframe.
- Discard marker, i.e., a marker determining if the frame is to be discarded or not.

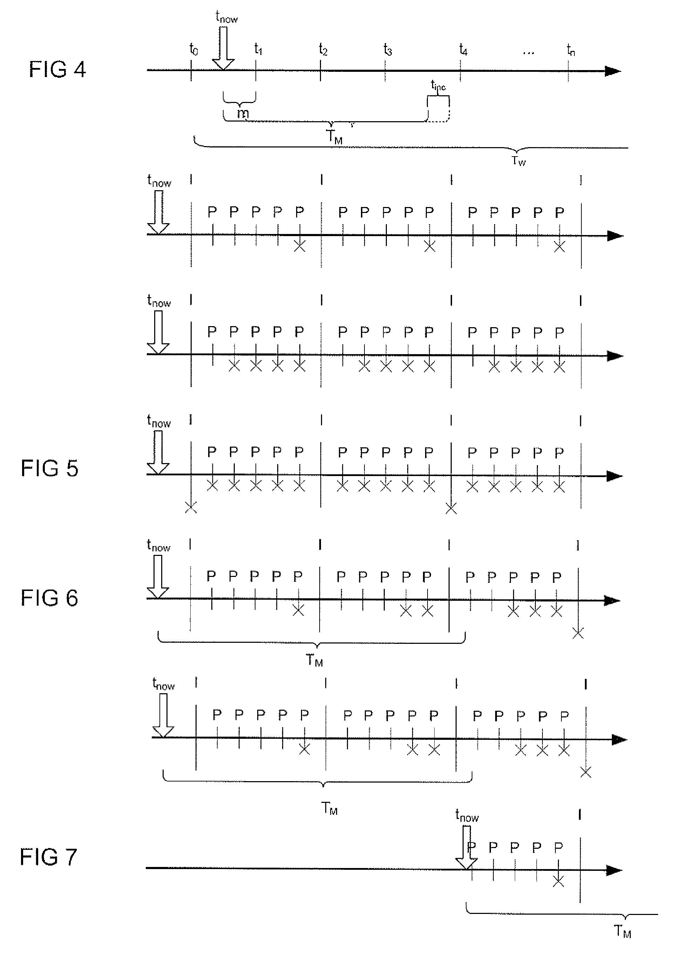

With reference to figure 4, a margin (m) in the jitter buffer is defined as the difference between the current time (t_{now}) and the recommended presentation time of the first frame (at t₁) in the jitter buffer. T_{M} is a time interval starting from t_{now}. Frames within this time interval will be sent to the receiver of the frame as soon as possible. The size of T_{M} depends on the system where the invention is implemented.

The predictor 11 in figure 3 is responsible for predicting the future behaviour of the system. The predictor 11 receives the current margin (m) from the jitter buffer 4 (and/or 5) and a reference margin (mᵣ) as an input control variable. It outputs a vector (E) of the predicted future differences between the reference margin and the actual margin (m - mᵣ). This value is a good indicator of the overall system performance. While this value is positive the system works as expected. If this value is getting negative the system is starting to experience some problems. The actual prediction algorithm can be more or less advanced. The simplest one could, for example, just assume that the next difference will be the same as the current difference. In one embodiment, the change of E is measured to predict if E is increasing or decreasing.

The reference margin (mᵣ) is usually constant but could be changed due to different system behaviour, e.g., depending on the codec used for video decompression, the system is working in low power mode, or there is a known background process working in the system.

The frame management algorithm 12 of one embodiment of the invention uses the input (E) from the predictor 11 to determine a valid action. Since it has a prediction of the future behaviour of the system it can pro-actively work with the data in the jitter buffer. It toggles the discard markers for the frames in the jitter buffer depending on its expectations of future system behaviour.

The algorithm for the system capacity detector 10 can be described as:
1. The predictor 11 calculates E.
2. Based on the future expectation, E, of system behavior the frame management algorithm 12 sets or clears the discard marker for a number of the frames in the jitter buffer. At least each frame in an interval T_{W} is treated.
3. The frame management algorithm 12 discards old data, that is, frames which have tᵢ < t_{now} + ε (ε≥0 is a margin for taking into account that a frame may be too late to be sent even if it is before t_{now}.)
4. For each frame where tᵢ is in the interval [t_{now}, t_{now} + T_{M}]
   a. If the discard marker is not set, send the frame to the renderer (e.g., the video decoder);
   b. else discard the frame.
5. Wait a fixed short time interval t_{inc},
6. Repeat from Step 1

The algorithm in Step 2 above can be more or less complex. A simple way would be to remove all interframes until the next intraframe, but more complex schemes could also be used. Since an intraframe is needed for decompression of subsequent interframes, discard markers are set beginning from the last interframes before the intraframes, and cleared in the reverse order. If an intraframe is discarded, all subsequent interframes up to the next intraframe are discarded since they cannot be decompressed. The term "subsequent" refers to the dependency order, not necessarily the order in which the frames were received. That means that frames should be removed from the end, i.e., the last frame in the dependency order should be removed first. The reverse applies when setting the markers.

Again with reference to figure 4, the algorithm is repeated in intervals of t_{inc}. t_{inc} is much smaller than T_{M}, so that the interval T_{M} is moved as a sliding window along the time axis. The next T_{M} is shown with a dashed bracket. T_{W} is a working interval containing the amount of frames suitable to have discard markers set or cleared in advance in dependence of the system capacity and the number of frames actually in the buffer. Typically, around 40 frames are marked. T_{W} shall be larger than T_{M}. Suitably T_{W} is a multiple of t_{inc}, i.e. T_{W} = k· t_{inc}, k = 1, 2, 3.... Suitably, T_{M} is approximately 15 times t_{inc}. Typical values of T_{M} are ≈1500ms and t_{inc} ≈100ms.

Below are a few examples of management schemes with reference to figures 5 to 7. Frames, interframes I and intraframes P, are marked for removal as indicated by ×.

In figure 5 (top) just a few inter-frames (P) are marked for removal since the predicted future behavior (E) is a light constant load. The frame rate to the rendering device is reduced by 1/6. In figure 5 (middle) some more interframes (P) are marked for removal since the expected load seems to be a lot heavier. The frame rate reduction is here 4/6.

Finally, in figure 5 (bottom) there are even some intraframes (I) removed due to the fact that system performance will be very bad. The frame rate reduction is here 17/18.

The algorithm could also take into account that the system performance is predicted to drop. This is shown in figure 6 where the system performance is predicted to be progressively worse, so more and more frames in the future is marked for removal. The frame rate reduction is here progressively increasing.

When the expected system performance is re-evaluated, there is the possibility for recovering frames, i.e., clear the discard marker before the frame is discarded, if the updated prediction of the system performance is not as bad as expected. As seen in figure 7, in the top diagram three frames are set to be discarded in the third group of frames (the first group of frames after T_{M}). When time has passed to the bottom diagram, two of the initially set discard markers have been cleared, so that only one frame has to be discarded. Thus, the discarding of frame is controlled dynamically in dependence of the current buffer margin and system capacity, actual and predicted.

The number of frames to be set for removal or cleared is mapped from the measured future expectation of system behaviour E. In one embodiment E contains a vector of values (m₋₁, m₋₂, m₋₃ ...) which is used to form a predicted vector Ê = (m₁, m₂, m₃ ...). The values are sorted in intervals and mapped with a table look-up procedure to the number of frames to be set or cleared. Suitably, the table is calibrated to the actual implementation. Also, the mapping may be an adaptive process.

Using this algorithm, the system can plan ahead and be prepared for system disturbances. If the system disturbance will take a long time there will be discarded frames, but if the disturbance is brief, the system will recover without having lost any data. Using the measure as described above it is also possible to determine ways to handle the disturbance based on the closeness to a decision threshold.

One effect of utilizing the graceful degradation scheme according to the invention is that the end-user may view the video data as a sequence of still images, while being recorded with less degradation or even with full quality. Another possibility is that the end-user, upon playback, will see the video data, recorded during a system utilization peak, as a sequence of still images.

Thus, the present invention provides a method enabling dynamic jitter buffer control in dependence of current buffer margins and system capacity, actual and predicted. The invention allows the receiver of a multimedia stream to dynamically control the processed bit rate of the video, thus providing means to provide the end-user with a reasonable viewing experience even during situations when the system resources are exhausted.

The invention is also manifested in a computer program product, in other words the data entity residing in a device or stored on a medium or in a memory and intended for insertion in a device. Hence, according to another aspect, a computer program comprises program code means adapted to cause a data processing device to perform the steps of the method described above and in the following, when said computer program is run on the data processing device.

The method, product means, and device described herein can be implemented by means of hardware comprising several distinct elements, and/or partly or completely by means of a suitably programmed microprocessor. In the device claims enumerating several means, several of these means can be embodied by one and the same item of hardware, e.g. a suitably programmed microprocessor, one or more digital signal processors, or the like. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

The previous description of particular embodiments is provided to enable persons skilled in the art to make and use the present invention. Various modifications to these embodiments will be apparent to those skilled in the art, and the generic principles defined herein may be applied to other embodiments without departing from the scope of the invention. The present invention is not intended to be limited to the embodiments shown herein but is only limited to the claims below.

## Claims

1. A method for jitter buffer control in a device (1) comprising: a receiver (2) for receiving a multimedia stream of frames and capable of providing each frame with a time stamp containing information about a recommended presentation time tᵢ and providing each frame with a discard marker; at least one jitter buffer (4; 5) for temporarily storing the frames from the receiver (2); a rendering device (6) for playback of the multimedia stream;
the method comprising:
monitoring a margin m of the jitter buffer (4; 5), the margin m being defined as the time difference between the current time t_{now} and the recommended presentation time tᵢ of the first frame in the jitter buffer that has a recommended presentation time that is larger than t_{now};
comparing the margin m with a reference margin mᵣ to calculate a control entity E;
discarding frames which have tᵢ < t_{now} + ε;
setting or clearing the discard marker for a number of the frames in the jitter buffer in dependence of the control entity E;
for each frame where tᵢ is in the interval [t_{now}, t_{now} + T_{M}], if the discard marker is not set, send the frame to the rendering device (6), else discard the frame; wait a time interval t_{inc};
repeat from the monitoring step.

2. A method according to claim 1, wherein the frames are of two types of frames, intraframes and interframes, and discard markers are set beginning from the last interframes before the intraframes, and finally intraframes, and cleared in the reverse order.

3. A method according to claim 1 or 2, wherein more discard markers are set in newer frames if the control entity E is predicted to be progressively worse.

4. A method according to any one of the preceding claims, wherein the reference margin mᵣ is changed due to different system behaviour.

5. A method according to any one of the preceding claims, wherein the system behaviour is predicted by measuring the change of the control entity E.

6. A method according to any one of the preceding claims, wherein t_{inc} is much smaller than T_{M}, e.g. T_{M} approximately 15 times t_{inc} .

7. A method according to any one of the preceding claims, wherein the discard marker are set or cleared for frames in a working interval T_{W} of the jitter buffer; and T_{W} = k· t_{inc}, k = 1, 2, 3....

8. A method according to any one of the preceding claims, wherein the discard marker for an upper limit of frames, e.g. maximum 40 frames, in the jitter buffer are set or cleared.

9. A method according to any one of the preceding claims, wherein the device (1) comprises one storage jitter buffer (5) for temporarily storing the frames from the receiver (2) to be forwarded to persistant storage (7), and one rendering jitter buffer (4) for temporarily storing frames from the receiver (2) or from persistant storage (7) to be forwarded to the rendering device (6), and a switch system(a, b, c) arranged to connect the receiver (2) to either or both of the jitter buffers (4 and 5) wherein either or both of the jitter buffers (4 and 5) are subjected to the method.

10. A method according to claim 9, wherein only the rendering jitter buffer (4) is subjected to the method.

11. A device (1) comprising: a receiver (2) for receiving a multimedia stream of frames and capable of providing each frame with a time stamp containing information about a recommended presentation time tᵢ; at least one jitter buffer (4; 5) for temporarily storing the frames from the receiver (2); a rendering device (6) for playback of the multimedia stream; **characterised:**
**in that** the receiver (2) is arranged to provide each frame with a discard marker; and by
a system capacity detector (10) comprising a predictor (11) arranged to monitor a margin m of the jitter buffer (4; 5), the margin m being defined as the time difference between the current time t_{now} and the recommended presentation time tᵢ of the first frame in the jitter buffer that has a recommended presentation time that is larger than t_{now}; to compare the margin m with a reference margin mᵣ to calculate a control entity E; and to output the control entity E to a frame management unit (12); said frame management unit (12) being arranged to discard frames which have tᵢ < t_{now} + ε; to set or clear the discard marker for a number of the frames in the jitter buffer in dependence of the control entity E; to control the jitter buffer, for each frame where tᵢ is in the interval [t_{now}, t_{now} + T_{M}], if the discard marker is not set, to send the frame to the rendering device (6), else discard the frame;
the predictor (11) being arranged to wait a time interval t_{inc}; and to repeat from the monitoring step.

12. A device (1) according to claim 11, wherein the system capacity detector (10) and the frame management unit (12) are arranged to operate according to any one of claims 2 to 8.

13. A device (1) according to claim 11 or 12, wherein the device (1) comprises one storage jitter buffer (5) for temporarily storing the frames from the receiver (2) to be forwarded to persistant storage (7), and one rendering jitter buffer (4) for temporarily storing frames from the receiver (2) or from persistant storage (7) to be forwarded to the rendering device (6), and a switch system(a, b, c) arranged to connect the receiver (2) to either or both of the jitter buffers (4 and 5) wherein either or both of the jitter buffers (4 and 5) are subjected to the control of the frame management unit (12).

14. A method according to claim 13, wherein only the rendering jitter buffer (4) is subjected to the control of the frame management unit (12).

15. A computer program product comprising program code means adapted to cause a data processing device to perform the steps of the method according to any one of claims 1 to 10.
